(19) **Europäisches Patentamt**
**European Patent Office**
**Office européen des brevets**

(11) **EP 3 921 066 B1**

(12) **EUROPEAN PATENT SPECIFICATION**

(45) Date of publication and mention
of the grant of the patent:
**27.12.2023 Bulletin 2023/52**

(21) Application number: **20753120.3**

(22) Date of filing: **05.02.2020**

(51) International Patent Classification (IPC):
**B01D 61/12** (2006.01) **B01D 61/08** (2006.01)
**B01D 61/10** (2006.01) **C02F 1/44** (2023.01)

(52) Cooperative Patent Classification (CPC):
**C02F 1/441; B01D 61/06; B01D 61/08;**
**B01D 61/12; C02F 1/008;** B01D 2311/10;
B01D 2311/14; B01D 2311/16; B01D 2311/24;
B01D 2313/18; B01D 2313/60; C02F 2209/005;
C02F 2209/006; C02F 2209/02; C02F 2209/03;

(Cont.)

(86) International application number:
**PCT/CA2020/050138**

(87) International publication number:
**WO 2020/160655 (13.08.2020 Gazette 2020/33)**

(54) **WATER TREATMENT METHODS AND APPARATUS**

WASSERBEHANDLUNGSVERFAHREN UND -VORRICHTUNG

PROCÉDÉS ET APPAREIL DE TRAITEMENT D'EAU

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Validation States:
**MA TN**

(30) Priority: **07.02.2019 US 201962802489 P**

(43) Date of publication of application:
**15.12.2021 Bulletin 2021/50**

(73) Proprietor: **Synauta Inc.**
**Canmore, AB T1W 1P4 (CA)**

(72) Inventors:
• **DIXON, Michael Bruce**
**Calgary, Alberta T2N 4J3 (CA)**
• **QUAINTANCE, Justin**
**Calgary, Alberta T2R 0N1 (CA)**
• **BRADSHAW, Thomas**
**Wollstonecraft, New South Wales 2065 (AU)**

(74) Representative: **Potter Clarkson**
**Chapel Quarter**
**Mount Street**
**Nottingham NG1 6HQ (GB)**

(56) References cited:
**EP-A1- 3 317 229      EP-B1- 2 368 624**
**EP-B1- 2 368 624      CN-A- 106 076 119**
**US-A- 5 494 573      US-A1- 2008 190 848**
**US-A1- 2013 068 674      US-A1- 2014 061 129**
**US-A1- 2016 229 713      US-B2- 9 314 742**
**US-B2- 9 360 848**

• **Satyam Srivastava, Vaddadi Saikrishna, Kumar**
**Pankaj, Sadistap Shashikant: "Design and**
**development of reverse osmosis (RO) plant**
**status monitoring system for early fault**
**prediction and predictive maintenance", Applied**
**Water Science, vol. 8, no. 6, 18 September 2018**
**(2018-09-18), page 159, XP055730249, DOI:**
**10.1007/s13201-018-0821-8**

**EP 3 921 066 B1**

(52) Cooperative Patent Classification (CPC): (Cont.)
C02F 2209/05; C02F 2209/40; Y02A 20/131

## Description

## FIELD OF THE INVENTION

The invention disclosed herein relates to processes for water desalination. In particular, the invention relates to measuring parameters in a reverse osmosis system and controlling the system to reduce energy consumption.

## BACKGROUND OF THE INVENTION

Generally optimizing a plant consists of calculating various parameters and setting up the plant to operate best over a range of projected conditions. However, a precise daily optimization routine has been overlooked for many years due to the difficulty in calculation.

An aspect of the problem stems from a mismatch between design and operation. A designer can take weeks or months to dial in the perfect conditions on paper for a plant. Once constructed, the operator generally has very little time to optimize the operating conditions to match the tight conditions set by the designer.

Many plant alarms can occur daily and it is the operator's job to fix the issues as quickly as possible. The overriding objective in operating plants is usually to avoid the non-provision of water to the city. This is normally a higher priority than energy usage and is often heavily penalized through fines. Therefore, plants are typically operated in such a way as to avoid downtime, rather than to reduce energy consumption.

In order to manually optimize a plant, operators typically need to be skilled in mathematics and trained in using the equations to normalize data, make an informed decision based on experience and make changes to the plant. In the process there are several informed guesses made, such as the properties of the reverse osmosis membranes. These can be measured, but results take typically weeks to arrive and are not always accurate.

Crucially, such optimisation may require a plant shutdown and sacrifice of several Reverse Osmosis elements (for laboratory testing) to obtain the necessary accuracy. The other unknown variables include the energy efficiency of the pump and associated motor. These variables constantly change with flow as well as with age of the pump. Thus, the mathematics is difficult to process and is in many cases beyond the skill set of the operator. Leading global experts in Reverse Osmosis may realistically take a week or longer for a single optimization point to be attained.

A number of new technologies have been explored to reduce energy (e.g. pumps, membranes, pressure exchange systems). In the context of a reverse osmosis system, 2-3% energy savings may be considered significant.

JP 2011/240,234 includes a drain valve for adjusting the amount of the concentrated seawater discharged from the power recovery device; a sensor for measuring a pressure of the seawater supplied to the reverse osmosis membranes; a sensor for measuring the flow rate of fresh water discharged from the reverse osmosis membrane; sensors for measuring the flow rate of the concentrated seawater discharged from the reverse osmosis membranes or the flow rate of the seawater sent out from the pump; a sensor for measuring the flow rate of the seawater supplied to the power recovery device; and a control part for controlling based on values measured by the sensors.

JP 2014/161,807 is intended to attain large capacity of a permeation water manufacturing quantity and reduce cost in a device, in a reverse osmosis membrane apparatus having a power recovery device.

US 9,360,848 relates to a reverse-osmosis water desalination plant comprising: a reverse-osmosis membrane unit; at least one high-pressure pump; a pressure-exchange type energy collector capable of transferring pressure from the concentrate leaving the membrane unit to a portion of the water to be treated; sensors for various operating parameters, in particular pressure, flow rate, temperature and salinity level, said sensors being provided at suitable locations; and control loops so that the various adjustable elements are maintained at a setpoint value. The plant also includes a secondary control system comprising calculation means programmed to determine, on the basis of the operating conditions of the plant supplied by the sensors, a combination of setpoint values for the flow rate of the high-pressure pump, the mixing ratio of the energy collector and the conversion ratio, which combination minimizes the energy consumption of the high-pressure pump.

US 9,821,273 discloses a reverse osmosis system with at least one membrane unit comprising an inlet, a permeate outlet and a concentrate outlet, a high-pressure pump that is connected to the inlet, a pressure exchanger comprising at least one high-pressure concentrate connection, and a booster pump. It is endeavored to achieve the lowest possible energy consumption.

WO 2012/073693 discloses a reverse osmosis membrane separator provided with an energy recovery unit is characterized in being provided with: a high-pressure pump for raising a portion of the solution to be treated to a prescribed pressure and supplying same to the reverse osmosis membrane module unit; an energy recovery unit for raising the pressure of the remaining solution to be treated using the pressure of the concentrated water discharged from the reverse osmosis membrane module. This configuration is intended to prevent sudden changes in pressure on the reverse osmosis membrane module when starting operation and effectively prevent the deterioration of the physical properties of the reverse osmosis membrane.

WO 2012/111,734 discloses a compound desalination system which comprises a controller. The controller receives a variety of inputs including: the feed flow and pressure; the flow rate from the permeate output; and the flow rate of the concentrate output. Based on these readings, the controller controls the pressure exchange device, the supply pump and the booster pump.

Standard Test Methods for Operating Characteristics of Reverse Osmosis and Nanofiltration Devices (ASTM D4194) provides test methods for the determination of the operating characteristics of reverse osmosis devices using standard test conditions. US 2016/229713 A1 discloses a method for treating a liquid. A feed stream is separated into a permeate stream and a retentate stream by means of a member arrangement. At least a portion of the retentate stream is discharged from the member arrangement via a displacer arrangement as a defined displacer volume. The feed stream is divided into a portion that is fed into the membrane arrangement via a displacer arrangement as a defined displacer volume and into a portion that is fed to the membrane arrangement by means of a conveying unit. The yield is varied by changing the ratio of the speed of the conveying unit to the speed of the displacer arrangement.

## SUMMARY OF THE INVENTION

The present invention is defined by the claims. In accordance with an aspect of the disclosure, there is provided a reverse-osmosis system comprising:

a reverse-osmosis stage comprising a semi-permeable membrane, a feed inlet, a permeate outlet and a concentrate outlet, wherein the feed inlet is configured to receive feed water at a feed-water flow rate;

a concentrate valve configured to control the pressure of the concentrate outlet flow;

a sensor array having:

a feed pressure sensor;

a feed salinity and/or conductivity sensor;

a feed temperature sensor;

at least two flow sensors configured to measure at least two of: feed flow (e.g. the flow rate of liquid entering the feed inlet), permeate flow (e.g. the flow rate of liquid exiting the permeate outlet), and concentrate flow (e.g. the flow rate of liquid exiting the concentrate outlet);

a permeate salinity and/or conductivity sensor;

a differential pressure sensor configured to measure the difference between the feed pressure and the concentrate pressure; and

a permeate pressure sensor;

a controller configured to receive information from the sensor array and determine the permeate flow, the permeate salinity and the energy use, and

wherein the controller is configured to enable control of the feed-water flow rate and the position of the concentrate valve based on the received information to meet predetermined permeate flow and permeate salinity criteria and to reduce energy consumption.

It will be appreciated that the position of the concentrate valve may be considered to control the flow rate of liquid through the concentrate valve.

It will be appreciated that salinity and conductivity measurements may be interchangeable in that they both are a measure of the salt content within the flow. The salinity criteria may be expressed in terms of salinity and/or conductivity.

The feed-water flow rate may be controlled by controlling the speed of a feed pump and/or controlling a feed valve. The feed valve may be positioned downstream of the feed pump and upstream of the reverse-osmosis stage. For example, the feed water can be drawn by the feed pump and pumped through the feed valve. After the feed valve, the sensors would detect the flow parameters (e.g. pressure and/or flow rate) before being directed into the reverse-osmosis stage. The role of the feed valve is to control the feed pressure and may be used when there is no variable frequency drive on the feed pump.

The feed pump may comprise one or more pumps located in the line directly between the water source and the reverse-osmosis stage (e.g. which does not pass through an energy recovery device).

The feed inlet may be configured to receive feed water powered by a combination of the feed pump and power harvested from the concentrate outlet flow via an energy recovery device. It will be appreciated that some embodiments may have a feed pump but no energy recovery device.

The system may be configured to reduce the energy consumption for continuous operation of the system, given the configuration of the physical components of system rather than identifying issues with the system and repairing them (e.g. fouling of the reverse-osmosis membranes).

The system may comprise a booster pump configured to provide additional pressure to the feed water passing through the energy recovery device, and wherein the controller is configured to control the pressure and/or flow applied by the booster pump (e.g. to meet the predetermined criteria and reduce the overall energy consumption). A booster pump may comprise one or more pumps located in the line between the water source and the reverse-osmosis stage which passes through an energy recovery device.

The energy recovery device may comprise a spinner, rotor, a twin turbine or a piston arrangement.

The controller may be configured to enable control of the speed of the feed pump and the position of the concentrate valve based on the received information and on previous behaviour of the system to meet predetermined permeate flow and permeate salinity criteria and to reduce energy consumption. This may mean that the set points determined by the controller may be different for the same set of received information as the controller learns how the device behaves. This may also allow a controller to adapt to a particular reverse-osmosis system over time. For example, if two systems started with identical controllers, the response of the controllers may start to diverge as the controllers learned the particular behaviour of the two systems.

The controller may be configured to determine the water flow and the salt flow through the semi-permeable membrane, and to use these determined values to determine the feed flow rate and the position of the concentrate valve. The water flow and the salt flow values may correspond to the A- and B-values of the membrane. Using these determined values, rather than simply raw sensor data, may allow the controller to determine better configurations of the feed flow rate and concentrate valve position more quickly to reduce energy consumption.

The controller may be configured to use machine learning to determine the control of the feed-water flow rate, the speed of the feed pump and/or the position of the concentrate valve.

The controller may be configured to calculate predicted values for permeate flow, the permeate salinity and the energy use for particular configurations of the feed-water flow rate, the speed of the feed pump and/or the position of the concentrate valve based on previously received sensor array data.

The controller may be configured to control the feed-water flow rate, the speed of the feed pump and/or the position of the concentrate valve to be at values corresponding to the minimum energy use to meet predetermined permeate flow and permeate salinity criteria.

The controller may be configured to vary the the feed-water flow rate, the speed of the feed pump and/or the position of the concentrate valve around values corresponding to the minimum energy use to meet predetermined permeate flow and permeate salinity criteria; and refine the predicted values based on discrepancies between the predicted values and the measured values from the sensor array for particular configurations of the the feed-water flow rate, the speed of the feed pump and/or the position of the concentrate valve. That is, for the same received information, the controller may be configured to move through a series of different set points (e.g. feed pump speed and concentrate valve position) in sequence. The response of the system can then be used to refine the learned behaviour of the system.

The range of configurations explored may correspond to set points which are predicted by the controller to satisfy the permeate flow and permeate salinity criteria and have a predicted energy consumption within a predetermined range of the minimum predicted energy configuration which meets the permeate flow and permeate salinity criteria. For example, the range of configurations may correspond to configurations with a predicted energy consumption within 5% (or 1%) of the minimum predicted energy consumption (e.g. which meets the permeate flow and permeate salinity criteria).

The controller may be configured to alert the operator if discrepancies between the predicted values and the measured values from the sensor array for particular configurations of the speed of the feed pump and the position of the concentrate valve exceed a predetermined threshold.

The controller may be configured to control the the feed-water flow rate, the speed of the feed pump and/or the position of the concentrate valve in real time to meet predetermined permeate flow and permeate salinity criteria and to reduce energy consumption. Real time may mean receiving updated information and adjusting the system configuration frequently (e.g. every hour, every minute or continuously). The frequency of monitoring received information and adjusting the system may be fast relative to the changes in the input feed.

The sensor array may comprise an energy sensor configured to measure the energy consumption of the system.

The controller may be configured to calculate a measure of the energy consumption of the system (e.g. based on the measured flow rates and/or the configurations of the pumps).

The reverse-osmosis stage may comprise multiple permeate outlets, and the sensor array may have a respective permeate salinity sensor for each outlet.

The system may control the feed pump by controlling a feed valve. The system may control the feed-water flow rate by controlling the feed pump and/or a feed valve.

The system may comprise a permeate valve, which may also be controlled by the controller (e.g. to effect energy savings).

The permeate pressure sensor may be configured to make a one-time measurement of the permeate pressure which is provided to the controller and is used as a constant for subsequent determinations by the controller of the permeate flow, the permeate salinity and the energy use.

The received information may comprise time information. The controller may use the time information to determine temporal patterns. For example, the system may experience a daily cycle due to temperature changes and/or demand changes.

The sensor array may comprise feed temperature sensor.

According to a further aspect, there is provided a method of controlling a reverse-osmosis system comprising:

a reverse-osmosis stage comprising a semi-permeable membrane, a feed inlet, a permeate outlet and a concentrate outlet, wherein the feed inlet is configured to receive feed water having a feed-water flow rate (e.g. and powered by a feed pump);
a concentrate valve configured to control the pressure of the concentrate outlet flow;
the method comprising:

measuring a feed pressure;
measuring a feed salinity and/or conductivity;
measuring a feed temperature;
measuring at least two of: feed flow, permeate flow, and concentrate flow;
measuring a permeate salinity and/or conductivity;
measuring a differential pressure configured to measure the difference between the feed pressure and the concentrate pressure;
measuring a permeate pressure;
determining the permeate flow, the permeate salinity and/or conductivity and the energy use based on the measured parameters, and
enabling control of the feed-water flow rate and the position of the concentrate valve to meet predetermined permeate flow and permeate salinity criteria and to reduce energy consumption.

According to a further aspect, there is provided a computer program comprising computer program code configured to run in conjunction with a reverse-osmosis system, the reverse-osmosis system comprising:

a reverse-osmosis stage comprising a semi-permeable membrane, a feed inlet, a permeate outlet and a concentrate outlet, wherein the feed inlet is configured to receive feed water having a feed-water flow rate (e.g. and powered by a feed pump);
a concentrate valve configured to control the pressure of the permeate outlet flow as it passes through the pressure exchange;
a sensor array having:

a feed pressure sensor;
a feed salinity and/or conductivity sensor;
a feed temperature sensor;
at least two flow sensors configured to measure at least two of: feed flow, permeate flow, and concentrate flow;
a permeate salinity and/or conductivity sensor;
a differential pressure sensor configured to measure the difference between the feed pressure and the concentrate pressure;
a permeate pressure sensor;
wherein the computer program code is configured to receive information from the sensor array and determine the permeate flow, the permeate salinity and the energy use, and
to determine control information to control the feed-water flow rate and the position of the concentrate valve to meet predetermined permeate flow and permeate salinity criteria and to reduce energy consumption.

The membrane may be a thin film composite (TFC) membrane. The membrane may be a thin film nanocomposite (TFN) membrane or any other surface determined to partition water and salt.

The feed pump may comprise a low-pressure pump and/or a high-pressure pump.

The high-pressure pump may be powered by a Variable Frequency Drive (VFD).

The reverse-osmosis stage may comprise two permeate outlets (e.g. a front and rear outlet). The flow from these outlets may be combined and the various parameters measured on the combined flow. In other embodiments, each permeate outlet may comprise its own set of sensors. In other embodiments, some parameters may be measured independently (e.g. salinity), whereas others may be measured in aggregate (e.g. pressure). The reverse-osmosis stage may be configured such that the permeate is configured to exit from only one of the front and rear outlets or from both outlets.

The system may be a one-stage or a two-stage or a multiple-stage reverse osmosis system. In a one stage reverse osmosis system, the feed water enters the reverse osmosis system as one stream and exits the reverse osmosis system as either concentrate or permeate water.

In a two-stage system the concentrate (or reject) from the first stage then becomes the feed water to the second stage. The permeate water collected from the first stage is combined with permeate water from the second stage. Additional stages increase the recovery from the system.

The system may comprise a concentrate recycle conduit configured to take a portion of the concentrate stream and feed this back to the feed water to the first stage to help increase the system recovery.

Fouling occurs when contaminants accumulate on the membrane surface effectively plugging the membrane. As certain dissolved (inorganic) compounds become more concentrated then scaling can occur if these compounds exceed their solubility limits and precipitate on the membrane surface as scale. Mechanical damage to the membrane includes physical damage to the membrane and may be caused by over-pressurising the reverse-osmosis stage. Any changes to the membrane may affect the salt transmission (B-Value) through the elements and/or the water transmission (A-Value) through the elements.

A reverse osmosis membrane may refer to a sheet of material configured to perform the actual desalting. A reverse osmosis element may refer to an assembly comprising a reverse osmosis membrane. It is common that a reverse osmosis element is a spiral of membrane material which is fiberglassed and is ready for installation into, or has already been installed within, a pressure vessel.

The pressure exchange device or energy recovery device may comprise a Pelton wheel. A Pelton wheel is an impulse-type water turbine which extracts energy from the impulse of moving water. A Pelton wheel system may be optimized by controlling a feed valve rather than a VFD on the feed pump.

A computer program may be stored on a non-transitory medium such as a CD or a DVD. A computer program may be stored on a USB or in the cloud.

The controller may comprise processing components remote from the reverse osmosis stage. The remote processing components may be in communication with the sensors and the controlled components (e.g. pump(s), concentrate valve) via wired and/or wireless communication links.

The methods and systems may employ artificial intelligence (AI) techniques such as machine learning and iterative learning. Examples of such techniques include, but are not limited to, expert systems, case-based reasoning, Bayesian networks, behavior-based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning). The methods and systems may use reinforcement learning, deep neural networks and/or recurrent neural networks.

The computer may operate in a networked environment. A remote computing device may comprise a personal computer, a server, a portable computer (e.g., laptop, mobile phone, tablet device). Connections between the computer, controller and/or a remote computing device may be via a network, such as a local area network (LAN) and/or a general wide area network (WAN). The computer may be connected to or part of a cloud-computing system.

The machine learning may use supervised or unsupervised learning which comprises learning a function that maps an input to an output based on example input-output pairs. It may involve inferring a function from labeled training data consisting of a set of training examples. In supervised learning, each example is a pair consisting of an input object (e.g. measured sensor data) and a desired output value (e.g. output flow, salinity, energy consumption). A supervised learning algorithm may be configured to analyze the training data and produces an inferred function, which can be used for mapping new examples. Unsupervised learning could be used to identify the sensor data and find errors in the data.

To simulate the effect of changing plant conditions the machine learning may use a Feed Forward Neural Network (FFNN). The FFNN is a network of neurons and has weighted edges between neurons. Neurons are organized in layers where each neuron in the current layer is connected to every other neuron in the next layer. The "activation" of any given neuron is based on the weights of the connections and the activation of the neurons in the previous layers. This is represented mathematically with the weight of the connection being a coefficient in the value of the activation of the corresponding neuron. A backpropagation algorithm optimizes the network so that when the input data is represented in input neuron activations, the output neuron activations is our desired output. The machine learning may represent this structure by making each layer a vector and using the alternating direction method of multipliers (ADMM) algorithm to perform backpropagation.

The Machine Learning uses many different factors that may not be apparent from simply using conventional calculations in the controller. Using Machine Learning (or any control based on past behaviour) means that the set points (e.g. feed pump speed and concentrate valve position) may change or be different for the same set of inputs (e.g. measured sensor values). This is in contrast to a controller which is based on a calculation, in which the same set points will be calculated for the same set of inputs.

The controller may receive information corresponding to the time (e.g. time of day, time of year). The Machine Learning may use time as an input for the set point predictions and calculations. Experimentation has shown that water quality is very dependent on the current season as weather patterns and temperature can have a tangible effect on the optimum set points of the plant. The sensor array may comprise a thermometer configured to measure the temperature of the feed water.

The controller may be configured to enable control of the speed of the feed flow rate, the feed pump and/or the position of the concentrate valve based on the received information (e.g. from the sensor array and/or that associated with time) to meet predetermined permeate flow and permeate salinity criteria and to reduce energy consumption.

Other factors that the present system may account for are the efficiency of plant components, such as pump efficiency, membrane conditions, energy recovery device efficiency, that are not modeled in a conventional controller approach. The machine learning can make set point predictions that account for such factors without an explicit mathematical model. This allows our system to be much more robust to changes in the plant and try set points that a normal controller may miss. Additionally, the machine learning will adapt with time. While it will predict a good optimized set point for one particular time, it will gain more energy efficiency as the system collects more data and further learns.

The controller may comprise a processor and memory. The memory may store computer program code. The processor may comprise, for example, a graphics processing unit, a central processing unit, a microprocessor, an application-specific integrated circuit or ASIC or a multicore processor. The memory may comprise, for example, flash memory, a hard-drive, volatile memory.

## BRIEF DESCRIPTION OF THE DRAWINGS

The invention is described with reference to the drawings in which:

Figure 1 is a schematic diagram of an embodiment of a reverse osmosis system.

Figure 2 is a flow diagram showing control of the reverse osmosis system.

Figure 3 is a graph of a cost function for a particular plant at a particular time;

Figure 4a is a graph of Energy Savings over an 8-month period for the plant of Figure 3.

Figure 4b and 4c are graphs of flow rates over an 8-month period before and after optimization.

## DESCRIPTION OF THE INVENTION

### Overview

The technology generally relates to the optimization of a reverse osmosis (RO) system to reduce the amount of energy used per unit of water produced. Energy efficiency is extremely important in desalination, as energy costs can be as high as 30-40% of the total operational costs.

The present technology relates to desalinating water using Reverse Osmosis. Reverse Osmosis involves pumping salty water through a semi-permeable membrane (one which is much more permeable to water than to salt). The pressure means that water molecules are driven through the semi-permeable membrane much more quickly than the salt ions. In this way, the raw or feed water supply (e.g. from the sea) is separated into a clean water (permeate) output and a concentrate output which is even more salty than the raw/feed water.

Reverse Osmosis systems may comprise: a reverse-osmosis unit comprising a semi-permeable membrane, a feed inlet, a permeate (clean water) outlet and a concentrate (salty water) outlet; wherein the feed inlet is configured to receive feed water powered by a combination of a feed pump and power harvested from the concentrate outlet flow via a pressure exchange; and a concentrate valve configured to control the pressure of the concentrate outlet flow as it passes through the pressure exchange.

In accordance with the present disclosure, the sensor array will typically have:

- a feed pressure sensor (the feed relating to the water entering the Reverse Osmosis Unit after the pump and pressure exchange);
- a feed flow sensor;
- a feed salinity/conductivity sensor;

- a feed temperature sensor;
- an output flow sensor configured to measure at least one of the permeate (clean) flow and the concentrate (salty) flow;
- a permeate salinity/conductivity sensor;
- a differential pressure sensor configured to measure the difference between the feed pressure and the concentrate pressure; and
- a permeate pressure sensor.

It will be appreciated that some embodiments may include additional sensors such as pH sensors, Oxidation-Reduction Potential (ORP) sensors and/or energy sensors.

It will be appreciated that some parameters may be directly measured by a sensor or calculated from a combination of multiple sensor inputs. For particular embodiments, some of the parameters may be fixed and so one initial measurement may be sufficient. That is, continuous monitoring of that parameter may not be required. For example, the permeate pressure may be kept constant for a particular set-up and so would not need to be continuously monitored.

The present disclosure relates to using Machine Learning to reduce power consumption by:

- determining the permeate flow, the permeate salinity/conductivity and the energy use from the sensed values, and
- enabling control (e.g. by adjusting or providing set points for) the feed-water flow rate and the position of the concentrate valve to meet predetermined concentrate flow and permeate salinity/conductivity criteria and to reduce energy consumption.

That is, typically a Reverse Osmosis system will have predetermined requirements. For example, it must produce enough water for the population (or industrial site) that it is serving. Likewise, for example, the produced water must be sufficiently pure, for example, to be drinkable (or to be used in a particular industrial process). In addition, the system must generally be configured to produce water of sufficient purity to meet predetermined local water quality guideline/restriction values. Then, the system is configured to satisfy these requirements while reducing energy consumption (e.g. in real time).

Other embodiments may also be configured to control the speed of the booster pump to reduce power consumption.

### Advantages

Conventionally, a human user would set up a Reverse Osmosis system and calculate the settings required for optimum performance. These settings would not typically be changed even if there were changes in the feed (e.g. temperature or flow). Machine learning may mitigate the need for lengthy calculations.

Analyses by the inventors have shown that there may be significant energy savings yet to be realised through the application of machine learning to RO. For example, in a seawater system operating with industry standard seawater reverse osmosis elements and a pressure exchange and with feedwater conditions 38,000ppm salinity and at 20°C the energy use was 2.2kWh/m$^3$. In a particular scenario, the feedwater salinity changes to 32,000ppm and the temperature changes to 30°C. In order to maintain the target permeate flow and target permeate salinity, the system conditions must be changed. The machine learning analyzes the historic data to establish the best set points at these feed conditions and membrane permeability and rejection properties. To meet the permeate flow and permeate salinity constraints of the plant, the high-pressure pump is increased 7%, the booster pump is increased 5.5%, and the concentrate valve is adjusted accordingly to avoid over flush and create balanced flow. In this scenario the new energy use is 1.85kWh/m$^3$ or approximately 20% energy saved. If the plant was not optimized, in this case the permeate salinity constraint would be exceeded.

In addition, machine learning automatically addresses problems relating to assumptions made in the calculations which are incorrect (or not quite accurate), and machine learning can more easily take into account changes in the system configuration (e.g. if a pressure exchanger, pump or reverse osmosis membrane is replaced or maintained, the machine learning could learn to compensate for the different characteristics of the new component).

**Reverse Osmosis System**

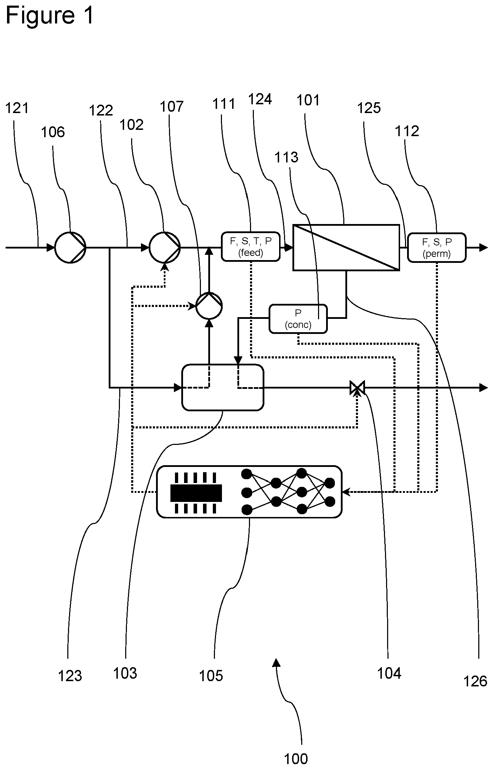

Figure 1 shows an embodiment of a reverse-osmosis system 100. The reverse-osmosis 100 in this case comprises:

a reverse-osmosis stage 101 comprising a semi-permeable membrane, a feed inlet 124, a permeate outlet 125 and a concentrate outlet 126;
wherein the feed inlet 124 is configured to receive feed water powered by a combination of a feed pump 102 and power harvested from the permeate outlet flow via a pressure exchange 103; and
a concentrate valve 104 configured to control the pressure of the permeate outlet flow as it passes through the pressure exchange 103.

The reverse-osmosis stage 101 consists of a pressure vessel with a semi-permeable membrane that allows water from the feed inlet to be pressed against it. The membrane is configured to withstand the pressure that is applied against it (e.g. between 103kPa-7584kPa - between 4826kPa-7584kPa for seawater; 103-4136kPa for brackish water ( (e.g. between 15-1100psi - between 700-1100psi for seawater; 15-600psi for brackish water)). Reverse osmosis membranes may be made in a variety of configurations, with the two most common configurations being spiral-wound and hollow-fiber.

Only a part of the saline feed water pumped into the membrane assembly passes through the membrane with the salt removed. The remaining "concentrate" flow passes along the saline side of the membrane to flush away the concentrated salt solution to the concentrate outlet 126. The percentage of desalinated water produced versus the saline water feed flow is known as the "recovery ratio". This varies with the salinity of the feed water: typically, 20% for small seawater systems, 40% - 50% for larger seawater systems, and 80% - 85% for brackish water. The concentrate flow is at typically only 20-50 psi less than the feed pressure, and thus still carries much of the high-pressure pump input energy. For example, if the feed inlet pressure is 800psi, the concentrate outlet pressure may be 780psi (with a pressure differential of 20psi).

Because the pressure in the concentrate 126 is relatively high, energy can be harvested from the concentrate flow in order to pressurise at least a portion of the feed water. Energy recovery can reduce energy consumption by 50% or more. Much of the high-pressure pump input energy can be recovered from the concentrate flow, and the increasing efficiency of energy recovery devices has greatly reduced the energy needs of reverse osmosis desalination. A pressure exchange or energy recovery device is used in this case to recover energy from the concentrate flow.

The energy recovery device 103 may comprise a turbine, rotor or Pelton wheel comprising a water turbine driven by the concentrate flow, connected to the high-pressure pump drive shaft to provide part of its input power. Typically, these may be hydraulic or positive displacement type such as the ERI PX™, Calder DWEER™ or KSB™ type or other manufacturers. Positive displacement axial piston motors have also been used in place of turbines on smaller systems.

The pressure exchange device may comprise a turbocharger comprising a water turbine driven by the concentrate flow, directly connected to a centrifugal pump which boosts the pressure in at least a portion of the feed line. In the case where a turbo is used, the booster pump may be omitted.

There may be embodiments where no pressure exchange device is used. In such an embodiment, energy recovery device 103, booster pump 107 and channel 123 are not used. Instead, the concentrate outlet is directly connected to valve 104.

The pressure exchange device may comprise an energy recovery pump: a reciprocating piston pump having the pressurized concentrate flow applied to one side of each piston to help drive the membrane feed flow from the opposite side. These are generally simple energy recovery devices to use, combining the high-pressure pump and energy recovery in a single self-regulating unit. These are widely used on smaller low-energy systems. They may be capable of 3 kWh/m$^3$ or less energy consumption.

A concentrate valve 104 is included in this embodiment to control the flow through the pressure exchange device 103. By controlling the concentrate flow through the pressure exchange device, the energy transfer to the feed flow may be improved (or optimized). The concentrate valve is configured to dictate the speed of the concentrate flow.

In this case, the feed inlet is configured to receive feed water powered by a combination of a feed pump and power harvested from the permeate outlet flow via a pressure exchange. That is, in this case, the initial feed line 121 is partially pressurised by an optional low-pressure pump 106. After this, the initial feed line is split into two parallel sections. One direct feed-flow section 122 is pressurised by a high-pressure pump 102 to a high pressure (e.g. 800psi in this case). Another boosted feed-flow section 123 is pressurised through a combination of passing through the pressure exchange device 103 described above and a booster pump 107. The direct 122 and boosted 123 feed-flow sections are then fed into the inlet 124 of the reverse osmosis stage 101.

In this embodiment, there is a sensor array configured to monitor various parameters of the reverse-osmosis system. The sensor array in this case comprises:

- a feed array 111 having: a feed pressure sensor; a feed flow sensor; a feed salinity sensor; and a feed temperature sensor.
- a permeate array 112 having: an permeate flow sensor; a permeate salinity sensor; and a permeate pressure sensor.
- a concentrate array 113 having: a concentrate pressure sensor.

In this case, the reverse osmosis stage 101 has one inlet 124 and two outlets 125, 126. Therefore, it will be appreciated that knowing the flow through two of these will allow the flow through the third to be calculated. In this case, the embodiment is configured to measure the flow in the feed inlet 124, and the flow from the permeate outlet 125. From these values, the flow from the concentrate may be calculated. In other embodiments, a different set of two flow rates may be measured using sensors or all three flow rates may be measured by sensors.

In this case, an important parameter is the differential pressure between the feed pressure at the feed inlet 124 and the concentrate pressure at the concentrate outlet 126. In this case, this parameter is calculated by determining the difference between the pressure measured by the feed pressure sensor and the pressure determined by the concentrate pressure. It will be appreciated that there may embodiments which are configured to have one sensor designed to directly measure the pressure differential between the feed and the concentrate.

As will be discussed further below, this embodiment comprises a controller configured to receive information from the sensor arrays 111, 112, 113 and determine the permeate flow, the permeate salinity and the energy use. Based on this information, the controller 105 is configured to control the speed of the feed pump 102 and the position of the concentrate valve 104 to meet predetermined permeate flow and permeate salinity criteria and to reduce energy consumption. In this embodiment, the controller is also configured to control the speed of the booster pump 107. In other embodiments, the controller may also be configured to control the speed of the low-pressure pump 106 or other pumps in any of the lines. In the embodiment where a turbo is used, the position of the turbo bypass valve may be controlled. In embodiments where no pressure exchange device is used control is of the high-pressure pump 102 speed and the concentrate valve 104; booster pump 107 is not controlled as it is not necessary as this item is not present.

## Controller

In this case, the controller 105 uses Machine Learning to determine the best configuration of the system in order to satisfy the requirements of the use (e.g. in terms of providing sufficient clean water with sufficiently low salinity) while reducing energy. Machine learning algorithms may be configured to build a mathematical model of sample data, known as "training data", in order to make predictions or decisions without being explicitly programmed to perform the task. It will be appreciated that operational data may also be used as training data. Training data for our purposes can also be generated from mathematical models and/or generated from existing data.

In this case, historical data is transferred to a data warehouse or other processing facility. The following parameters are input into our system: feed conductivity or salinity, feed temperature, feed pressure, feed flow, permeate flow, permeate conductivity or salinity, differential pressure, permeate backpressure and energy usage for the total plant and energy usage for the reverse osmosis unit process. In some embodiments the energy usage is calculated, in others it is measured. Other embodiments may use the A-value, the B-value and/or the time the data was collected (e.g. the month).

This data may be automatically cleaned, for example, to remove spurious data, errors and zero values. The cleaning may also involve labelling the data or otherwise processing the data so that it can be read and understood by the controller. It will be appreciated that this stage may be omitted if the data are already sufficiently clean.

In this case, the clean data are used to calculate A-Value and B-Values for the semi-permeable membrane. These figures correspond to the intrinsic water flux (A-Value) and intrinsic salt flux (B-Value) of the membrane surface. The calculation of the A and B Values may help allow the controller determine energy savings because the energy is more dependent on these values than on the raw sensor figures. This may make a mapping from the A and B values to a predicted energy consumption output easier to find. It may also put the sensors into a better context of the plant because A and B calculations take into account things such as membrane element properties. The calculations for A and B are known in literature (e.g. Dow Filmtec™ Reverse Osmosis Manual, Form No. 609-00071-1009).

A-Value represents the water permeability or the resulting flux from a specific driving pressure. The A-value is typically directly proportional to the normalized permeate flow. Most manufacturers recommend cleaning the membranes when those parameters drop 10% from the stabilized startup reference. The A-Value of a particular membrane may decrease due to fouling. A-Value is measured in GFD/psi or LMH/bar, in the International System: $m^2/(m^2.s.Pa)$.

The B-Value is the salt diffusion rate through the membrane. Every salt has its own B-value for a specific membrane according to it's chemical and physical properties. In some embodiments, B-Values may be calculated for a number of different salts. In other embodiments, the system may be configured to treat all salts as if they were NaCl. The B-value is typically directly proportional to the Normalized Salt Rejection. Most manufacturers recommend cleaning the modules when those parameters increase 10%. The B-Value of a particular membrane may increase due to fouling or membrane degradation (abrasion, oxidation, etc...). B-Value is measured in flux units: GFD/psi or LMH/bar, in the International System: $m^2/(m^2.s.Pa)$.

Typically reverse-osmosis membranes do not have pores, rather they are semi-permeable to salt. That is, salt is absorbed into the body of the membrane and transported from the salty side to the clean side. "Salt removal" occurs because the speed of the water transport is much faster than the speed of the salt transport across the membrane. In other words, B-Value is a measure of the speed at which salt absorbs into the membrane and is transported to the other side.

The clean data is used to train the Machine Learning algorithms, creating specific algorithms for each site. Before the data is given to the machine learning Algorithms it may be normalized as different sensors have vastly different domains. The normalization methods may include: Min-Max Normalization, Standard Deviation method, power transformations, Length-one Normalization, Z-Score Normalization or other techniques.

Historical data (detailed above) is used to train the algorithms, and then more operational data is used over time to continue to refine the algorithm (e.g. online learning) and to reflect changes in the operational parameters of the system (e.g. membrane and/or pump degradation). A and B-Value are important in some embodiments to provide a more effective the model.

In addition, the system is configured to receive constraints to inform the Machine Learning algorithms where the limits are for permeate flow and permeate salinity.

The Machine Learning algorithms may be configured to calculate a cost function based on a combination of the permeate flow, permeate salinity and energy consumption. For example, the cost function, $\sigma_{Total}$, may be calculated by determining the product of a permeate flow score, $\sigma_{F(Perm)}$, a permeate salinity score, $\sigma_{S(Perm)}$, and an energy consumption score, $\sigma_{Energy}$:

$$\alpha_{Total} = \alpha_{F(perm)} \times \alpha_{S(Perm)} \times \alpha_{Energy}$$

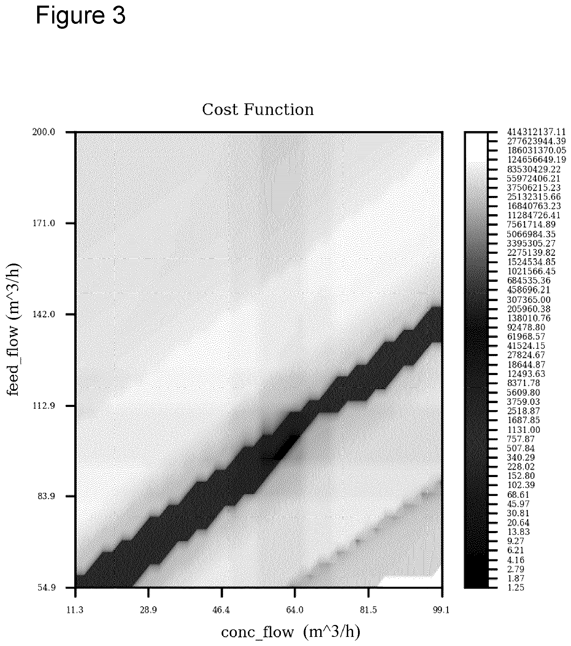

The permeate flow and permeate salinity scores may be a step function, wherein each of the permeate flow and permeate salinity scores is 1.0 within the predetermined thresholds (e.g. set by the operator) and 0.0 when outside the predetermined thresholds. The energy score may be lower for higher energy (e.g. an exponential decay curve). In this example, the system would be configured to determine configurations which increased the cost function. One such cost function is shown in Figure 3 which is discussed in greater detail below. It will be appreciated that each of these functions may be weighted to change the relative importance of the various factors.

The Machine Learning feeds an optimizer and set points for the plant are reported. The set points define the settings to control the speed of the feed pump and the position of the concentrate valve to meet predetermined permeate flow and permeate salinity criteria and to reduce energy consumption. The optimizer may use differential evolution, Ant colony optimization and/or Gradient descent.

The reported results are either transferred to the operator by email, or automatically to their SCADA (Supervisory Control And Data Acquisition), or via an intermediary software portal/dashboard. For plants with a pressure exchanger (PX) type energy recovery device, results are reported as "high pressure pump variable frequency device (VFD) setting or flow", "booster pump VFD setting or flow" and "PX device low pressure outlet valve set point". In circumstances where the energy recovery device is a turbo, these become "high pressure pump VFD setting or flow" and "turbo bypass valve set point". In scenarios where no energy recovery device is used at all, these are "high pressure pump VFD setting or flow" and "concentrate valve set point".

If set points are transferred by email, the operator physically makes the changes. Alternatively, the data is transferred directly (e.g. automatically) to the SCADA or automatically via an intermediary software portal or dashboard.

In this technology, we apply machine learning algorithms to analyze the plant inputs (feed salinity, feed temperature) and minimize the energy use through an optimizer that then reports the feed pump set point, the booster pump set point and the concentrate valve set point. These set points may be delivered via software to the SCADA system to enable control of the set points.

Machine learning removes the need for lengthy calculation. Machine learning algorithms may mitigate the need for estimates or calculations. Therefore, they can be applied on a more regular basis (daily, hourly or even every minute).

It will be appreciated that the machine learning is configured to base its determination on associating: calculated or sensor-measured system parameters; output parameters (e.g. permeate flow, salinity and energy consumption); and input parameters (e.g. speed of high-pressure pump, valve position). The Machine Learning may be configured to predict the output parameters for a particular configuration of input parameters.

In some embodiments, the system may be configured to explore a particular subset of input parameters to record the system response in order to better learn the system characteristics. For example, the system may be configured to determine a range of input conditions which provides a predicted power requirement no more than 105% (or 101%) of the optimum predicted power. The system may be configured to vary the input within this subset of possible input conditions in order to determine whether there are better configurations than the predicted optimum input conditions. This may help the learning algorithm better categorise the system. It may also allow the Machine Learning algorithm to adapt to changes in the system (e.g. the membrane degrading or fouling, the pumps becoming less efficient). If discrepancies between the predicted and actual outputs are found, the system may be configured to repeat the steps of predicting the output based on the updated information received from the system.

In some embodiments, the system may be configured to use discrepancies between the predicted and actual outputs to determine whether faults have occurred. For example, if there were a failure in one of the components, the discrepancy between the predicted and actual outputs may be used to alert the operator.

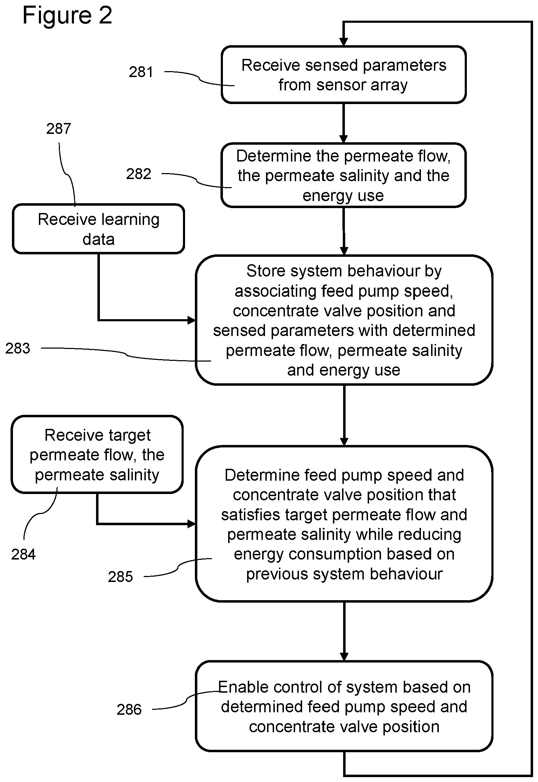

Figure 2 is a flow diagram showing control of the reverse osmosis system.

As shown in figure 2, the controller is configured to receive 281 sensed parameters from sensor array. The received sensed parameters may include: a feed pressure; a feed flow; a feed salinity; a feed temperature; at least two of: feed flow, permeate flow, and concentrate flow; a permeate salinity; a differential pressure between the feed pressure and the concentrate pressure; and a permeate pressure.

From these received sensed parameters, the controller is configured to determine 282 the permeate flow, the permeate salinity and the energy use.

The controller is configured to store 283 system behavior by associating feed pump speed, concentrate valve position and sensed parameters with determined permeate flow, permeate salinity and energy use. In this case, the stored behavior is derived from operational data determined during operation of the system (e.g. via steps 281 and 282) and/or from learning data received 287 by the controller as training data.

Based on the stored system behavior, received 284 target permeate flow, and the permeate salinity, the controller is configured to determine 285 feed pump speed and concentrate valve position that satisfies target permeate flow and permeate salinity while reducing energy consumption.

Then the controller is configured to enable 286 control of system based on determined feed pump speed and concentrate valve position. This will change the configuration of the system and so will change the sensed parameters. In addition, the sensed parameters may change as a result of the feed changing (e.g. the temperature or salinity of the feed changing). Therefore, the system is configured to continuously or periodically monitor the sensed parameters and make adjustments accordingly.

## Other Options

As noted above, the controller may be configured to determine the water flow and the salt flow through the semi-permeable membrane (A and B-values), and to use these determined values to determine the speed of the feed pump and the position of the concentrate valve.

The controller may be configured to calculate the energy consumption based on the data received from the sensor array. In other embodiments, the sensor array may comprise an energy or power sensor configured to measure the energy/power consumption of the system.

The controller may be configured to calculate one or more of: differential pressure (or feed channel pressure drop), normalized salt passage, normalized flux, A-value, B-value.

The controller may be configured for the optimization of energy recovery devices. Feed flow to the energy recovery device determines its best efficiency point. Additionally, limiting over flush to 0% will reduce wasted pumping energy. Zero over flush corresponds to "balanced flow" when the feedwater inlet flow rate equals the feedwater outlet flow rate.

The system may be configured to take pump set point efficiency into account. Each pump has its best efficiency point and often plants will not run at this precise condition.

The above system is configured to create energy savings. On a 300,000m³/day plant, if 0.2kWhr/m³ is saved, $1.5M in energy alone can be saved at 15c/kWh.

The system could monitor the weather and thus predict seawater (or feed water) temperature and furthermore make the system produce more water on warmer days and less water on cooler days (thus reducing energy), but result in the same amount of water produced over a longer time period, such as one week. The controller may be configured to set up the system based on predicted water temperature (e.g. by receiving ambient temperature data, comparing with measured feed water temperatures as well as comparing with a government (or private) agency's predicted ambient temperature values and predicting the feed water temperature for an upcoming point in time). Such a system would use machine learning to produce the predicted feed water temperature.

The system may comprise a holding tank for permeate water. The system may be configured to use predictive temp and/or salinity Machine Learning to generate a reservoir of clean water when conditions are optimal. For example, in a seawater system, the controller may use plant data and publicly available weather data to aid planning for the following day/week (e.g. make more water when temp is highest to save max energy).

This technology may be particularly useful in areas where feedwater quality to a reverse osmosis system changes substantially (e.g. in breweries, dairy and oil and gas). Of particular interest are river water plants that are tidally affected (for example in the Thames River, UK). Additionally, brackish groundwater plants that are affected by saltwater intrusion dynamics in the aquifer, meaning salinity changes with time.

**Testing**

In the first instance we compared standard mathematics and basic Machine Learning to compare which approach was better. It was found that the Machine Learning was more successful in lowering the energy requirements of the system.

Additionally, the inventors found that the mathematics was lacking accuracy due to the difficulty in calculating internal membrane parameters (A and B-Value that change on a daily, weekly, monthly basis).

Next, we assessed a half dozen Machine Learning approaches and chose an approach that gave us the best fitting. We then applied this approach to a real plant data set and found energy savings of 10% when an optimization was performed on a daily basis.

In terms of variables tested, optimization has occurred for the following ranges:

• Feed Salinity: 12,000-40,000ppm
• Feed/Permeate Flow: Fine for any flow
• Feed Temp: 12-40C
• Feed pressure: 600-1000psi
• Permeate conductivity: 50-1600$\mu$S/cm

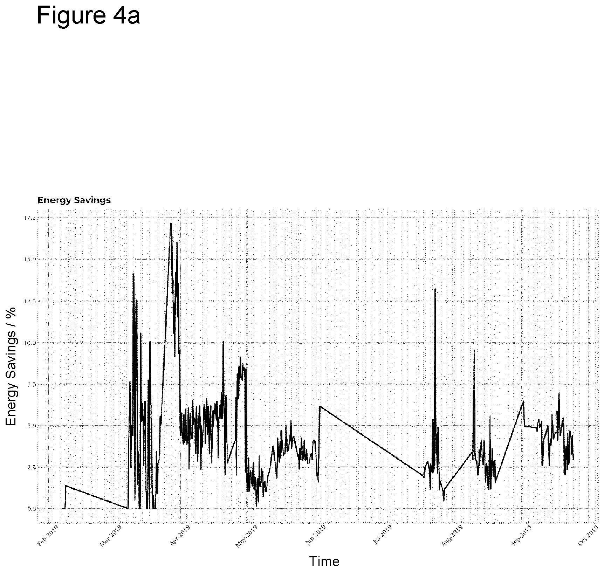

Figures 3 and 4a-c show how a plant may be optimized in order to generate energy savings. Figures 4a-c come from data from a seawater reverse osmosis plant with an an Isobaric Pressure Exchange device that has been operating since 2014. During the period under investigation (February - October 2019), the trial plant was switched off from time to time. Straight lines over multiple days represent when the plant was off, for example, between June and mid-July 2019.

For this plant, the feed water salinity is approximately 36,000mg/L and the plant produces 1,000m³/day of permeate water.

Figure 4a shows the energy savings yielded from the disclosed process at the plant. The graph shows that energy savings are typically in the 2.5-7.5% range but can sometimes be as high as 17.5%.

Figure 3 shows the cost function associated with various feed flows and concentrate flows at a snapshot in time. This graph is updated regularly (e.g. on a daily basis in this case) with A and B value and with the feed water temperature and salinity. Higher values (corresponding to darker areas of the graph) represent configurations with lower energies or set points at a particular time.

In this theoretical energy saving audit, we apply machine learning to the historic data once per day to assess how our algorithms could save energy on a given plant site. Energy savings are calculated based on energy used for that day in kWh/m³ in the actual plant data minus the theoretical energy use after the ML processing all divided by the actual plant energy use for that day.

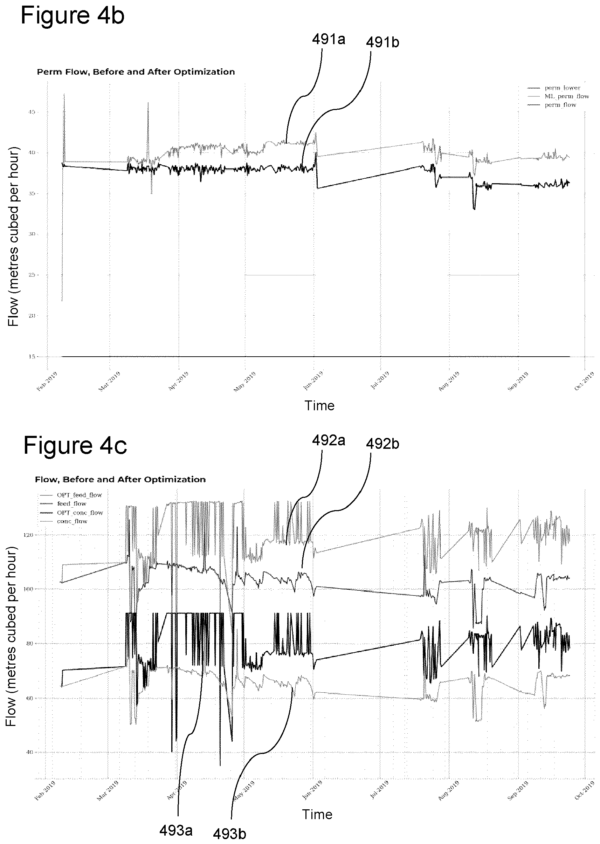

Figure 4b shows the proposed permeate flow 491a corresponding to the energy savings shown in figure 4a. Also shown in figure 4b is the actual permeate flow 491b used during this period by the plant. In this particular scenario, using the results of the machine learning, the permeate flow may be adjusted from that actually used to gain energy savings. The adjusted permeate flow can be higher or lower than the actually used values, based on the requirement at the plant.

Figure 4c shows the proposed feed 492a and concentrate 493a flows for the corresponding energy savings shown in figure 4a. Also shown in figure 4c is the actual feed 492b and concentrate 493b flows used during this period by the plant. In this particular scenario, using the results of the machine learning, the flows may be adjusted to gain further energy savings.

Although the present invention has been described and illustrated with respect to preferred embodiments and preferred uses thereof, it is not to be so limited since modifications and changes can be made therein which are within the full, intended scope of the invention as understood by those skilled in the art.

**Claims**

1. A reverse-osmosis system (100) comprising:

a reverse-osmosis stage (101) having a semipermeable membrane, a feed inlet (124), a permeate outlet (125) and a concentrate outlet (126), wherein the feed inlet is configured to receive feed water having a feed-water flow rate; a concentrate valve (104) configured to control the pressure of the concentrate outlet;

a sensor array (111, 112, 113) having:

a feed pressure sensor;
at least one of: a feed salinity and a conductivity sensor;
a feed temperature sensor;
at least two flow sensors configured to measure at least two of: feed flow, permeate flow, and concentrate flow;
at least one of: a permeate salinity and a conductivity sensor;
a differential pressure sensor configured to measure the difference between the feed pressure and the concentrate pressure; and
a permeate pressure sensor; and

a controller (105) configured to receive information from the sensor array and determine the permeate flow, the permeate salinity and the energy use,
wherein the controller is configured to enable control of the feed-water flow rate and the position of the concentrate valve based on the received information to meet predetermined permeate flow and permeate salinity criteria and to reduce energy consumption.

2. The system of claim 1, wherein the feed inlet is configured to receive feed water powered by a combination of a feed pump (102) and power harvested from the concentrate outlet flow via an energy recovery device (103).

3. The system of claim 2, wherein the system comprises a booster pump (107) configured to provide additional pressure to the feed water passing through the energy recovery device, and wherein the controller is configured to control the pressure and/or flow applied by the booster pump.

4. The system according to any one of claims 2-3, wherein the controller is configured to enable control of the speed of the feed pump (102) and the position of the concentrate valve (104) based on the received information and on previous behaviour of the system to meet predetermined permeate flow and permeate salinity criteria and to reduce energy consumption

5. The system according to any one of claims 2-4, wherein the controller is configured to use machine learning to determine the speed of the feed pump (102) and the position of the concentrate valve (104).

6. The system according to any one of claims 2-5, wherein the controller is configured to determine the water flow and the salt flow through the semi-permeable membrane, and to use these determined values to determine the speed of the feed pump and the position of the concentrate valve.

7. The system according to any one of claims 2-6, wherein the controller is configured to calculate predicted values for permeate flow, the permeate salinity and the energy use for particular configurations of the speed of the feed pump and the position of the concentrate valve based on previously received sensor array data.

8. The system of claim 7, wherein the controller is configured to:
control the speed of the feed pump (102) and the position of the concentrate valve (104) to be at values corresponding to the minimum predicted energy use to meet predetermined permeate flow and permeate salinity criteria.

9. The system of claim 7, wherein the controller is configured to:

vary the speed of the feed pump and the position of the concentrate valve around values corresponding to the minimum energy use to meet predetermined permeate flow and permeate salinity criteria;
refine the predicted values based on discrepancies between the predicted values and the measured values from the sensor array for particular configurations of the speed of the feed pump and the position of the concentrate valve.

10. The system according to any one of claims 1-9, wherein the controller is configured to control the speed of the feed pump and the position of the concentrate valve in real time to meet predetermined permeate flow and permeate salinity criteria and to reduce energy consumption.

11. The system according to any one of claims 1-10, wherein the reverse-osmosis stage comprises multiple permeate outlets, and wherein the sensor array comprises a respective permeate salinity sensor for each outlet.

12. The system according to any one of claims 1-11, wherein the received information comprises time information.

13. The system according to any one of claims 1-12, wherein the sensor array comprises a feed temperature sensor.

14. A method of controlling a reverse-osmosis system comprising:

a reverse-osmosis stage (100) comprising a semi-permeable membrane, a feed inlet (124),

a permeate outlet (125) and a concentrate outlet (126), wherein the feed inlet is configured to receive feed water powered by a feed pump (102); a concentrate valve (104) configured to control the pressure of the concentrate outlet flow; the method comprising:

measuring a feed pressure;
measuring a feed salinity and/or conductivity;
measuring a feed temperature;
measuring at least two of: feed flow, permeate flow, and concentrate flow;
measuring a permeate salinity and/or conductivity;
measuring a differential pressure configured to measure the difference between the feed pressure and the concentrate pressure;
measuring a permeate pressure;
determining the permeate flow, the permeate salinity and/or conductivity and the energy use based on the measured parameters, and
enabling control of the speed of the feed pump and the position of the concentrate valve to meet predetermined permeate flow and permeate salinity criteria and to reduce energy consumption.

15. A computer program comprising computer program code configured to run in conjunction with a reverse-osmosis system, the reverse-osmosis system comprising:

a reverse-osmosis stage (100) comprising a semi-permeable membrane, a feed inlet (124), a permeate outlet (125) and a concentrate outlet (126), wherein the feed inlet is configured to receive feed water powered a feed pump (102); a concentrate valve (104) configured to control the pressure of the concentrate outlet flow; a sensor array (111, 112, 113) having:

a feed pressure sensor;
a feed salinity and/or conductivity sensor;
a feed temperature sensor;
at least two flow sensors configured to measure at least two of: feed flow, permeate flow, and concentrate flow;
a permeate salinity and/or conductivity sensor;
a differential pressure sensor configured to measure the difference between the feed pressure and the concentrate pressure;
a permeate pressure sensor;

wherein the computer program code is configured to receive information from the sensor array and determine the permeate flow, the permeate salinity and the energy use, and
to determine control information to control the speed of the feed pump and the position of the concentrate valve to meet predetermined permeate flow and permeate salinity criteria and to reduce energy consumption.

**Patentansprüche**

1. Umkehrosmoseanlage (100), umfassend:

eine Umkehrosmosestufe (101) mit einer semipermeablen Membran, einem Speiseeinlass (124), einem Permeatauslass (125) und einem Konzentratauslass (126), wobei der Speiseeinlass konfiguriert ist, um Speisewasser mit einer Speisewasserdurchflussrate zu empfangen; ein Konzentratventil (104), das konfiguriert ist, um den Druck des Konzentratauslasses zu kontrollieren; eine Sensoranordnung (111, 112, 113) mit:

einem Speisedrucksensor;
mindestens einem von: einem Futtersalzgehalt- und einem Leitfähigkeitssensor;
einem Speisetemperatursensor;
mindestens zwei konfigurierte Durchflusssensoren, um mindestens zwei der folgenden Werte zu messen:

Speisefluss, Permeatfluss und Konzentratfluss;
mindestens eines von: einem Permeatsalzgehalt- und einem Leitfähigkeitssensor;
einem Differenzdrucksensor, der konfiguriert ist, um die Differenz zwischen dem Speisedruck und dem Konzentratdruck zu messen; und
einem Permeatdrucksensor; und
eine Steuerung (105), die konfiguriert ist, um Informationen von der Sensoranordnung zu erhalten und
den Permeatfluss, den Permeatsalzgehalt und den Energieverbrauch zu bestimmen,
wobei die Steuerung konfiguriert ist, um die Steuerung der Speisewasserdurchflussrate und der Position des Konzentratventils basierend auf den empfangenen Informationen zu ermöglichen, um vorgegebene Permeatfluss- und Permeatsalzgehaltskriterien zu erfüllen und den Energieverbrauch zu reduzieren.

**2.** System nach Anspruch 1, wobei der Speiseeinlass so konfiguriert ist, um Speisewasser zu empfangen, das von einer Kombination aus einer Speisepumpe (102) und aus dem Konzentratauslassstrom gewonnener Energie über eine Energierückgewinnungsvorrichtung (103) angetrieben wird.

**3.** System nach Anspruch 2, wobei das System eine Druckerhöhungspumpe (107) umfasst, die konfiguriert ist, um dem Speisewasser, das durch die Energierückgewinnungsvorrichtung fließt, zusätzlichen Druck zu verleihen, und wobei die Steuerung konfiguriert ist, um den von der Druckerhöhungspumpe ausgeübten Druck und/oder Durchfluss zu steuern.

**4.** System nach einem der Ansprüche 2 bis 3, wobei die Steuerung konfiguriert ist, um die Steuerung der Drehzahl der Speisepumpe (102) und der Stellung des Konzentratventils (104) auf Grundlage der empfangenen Informationen und des bisherigen Verhaltens des Systems zu ermöglichen, um vorgegebene Kriterien für Permeatfluss und Permeatsalzgehalt zu erfüllen und den Energieverbrauch zu senken.

**5.** System nach einem der Ansprüche 2 bis 4, wobei die Steuerung konfiguriert ist, um durch maschinelles Lernen die Drehzahl der Speisepumpe (102) und die Stellung des Konzentratventils (104) zu bestimmen.

**6.** System nach einem der Ansprüche 2 bis 5, wobei die Steuerung konfiguriert ist, um den Wasserfluss und den Salzfluss durch die semipermeable Membran zu bestimmen und diese ermittelten Werte zu verwenden, um die Drehzahl der Speisepumpe und die Stellung des Konzentratventils zu ermitteln.

**7.** System nach einem der Ansprüche 2 bis 6, wobei die Steuerung konfiguriert ist, um vorhergesagte Werte für den Permeatfluss, den Permeatsalzgehalt und den Energieverbrauch für bestimmte Konfigurationen der Geschwindigkeit der Speisepumpe und der Position des Konzentratventils auf der Grundlage zuvor empfangener Sensoranordnungsdaten zu berechnen.

**8.** System nach Anspruch 7, wobei die Steuerung konfiguriert ist, um:
die Geschwindigkeit der Speisepumpe (102) und die Position des Konzentratventils (104) so zu steuern, dass sie auf Werte eingestellt werden, die dem minimalen vorhergesagten Energieverbrauch entsprechen, um vorgegebene Permeatfluss- und Permeatsalzgehaltskriterien zu erfüllen.

**9.** System nach Anspruch 7, wobei die Steuerung konfiguriert ist, um:

die Geschwindigkeit der Speisepumpe und die Position des Konzentratventils um Werte herum zu variieren, die dem minimalen Energieverbrauch entsprechen, um vorgegebene Kriterien für Permeatfluss und Permeatsalzgehalt zu erfüllen;
die vorhergesagten Werte basierend auf Diskrepanzen zwischen den vorhergesagten Werten und den gemessenen Werten von der Sensoranordnung für bestimmte Konfigurationen der Geschwindigkeit der Speisepumpe und der Position des Konzentratventils zu verfeinern.

**10.** System nach einem der Ansprüche 1 bis 9, wobei die Steuerung konfiguriert ist, um die Geschwindigkeit der Speisepumpe und die Position des Konzentratventils in Echtzeit zu steuern, um vorgegebene Kriterien für den Permeatfluss und den Permeatsalzgehalt zu erfüllen und den Energieverbrauch zu senken.

**11.** System nach einem der Ansprüche 1 bis 10, wobei die Umkehrosmosestufe mehrere Permeatauslässe umfasst und wobei die Sensoranordnung für jeden Auslass einen jeweiligen Permeatsalzgehaltsensor umfasst.

**12.** System nach einem der Ansprüche 1 bis 11, wobei die empfangenen Informationen Zeitinformationen umfassen.

**13.** System nach einem der Ansprüche 1 bis 12, wobei die Sensoranordnung einen Speisetemperatursensor umfasst.

**14.** Verfahren zur Steuerung einer Umkehrosmoseanlage, umfassend:

eine Umkehrosmosestufe (100), die eine semipermeable Membran, einen Zulaufeinlass (124), einen Permeatauslass (125) und einen Konzentratauslass (126) umfasst, wobei der Speiseeinlass konfiguriert ist, um von einer Speisepumpe (102) angetriebenes Speisewasser zu empfangen;
ein Konzentratventil (104), das konfiguriert ist, um den Druck des Konzentratauslassstroms zu steuern;
wobei das Verfahren Folgendes umfasst:

Messen eines Speisedrucks;
Messen des Salzgehalts und/oder der Leitfähigkeit des Futters;
Messen einer Speisetemperatur;
Messen von mindestens zwei von: Speisefluss, Permeatfluss und Konzentratfluss;
Messen des Salzgehalts und/oder der Leitfähigkeit des Permeats;

Messen eines Differenzdrucks, das konfiguriert ist, um die Differenz zwischen dem Speisedruck und dem Konzentratdruck zu messen;

Messen eines Permeatdrucks;

Bestimmen des Permeatflusses, des Permeatsalzgehalts und/oder der Permeatleitfähigkeit und des Energieverbrauchs basierend auf den gemessenen Parametern, und

Ermöglichen der Steuerung der Geschwindigkeit der Speisepumpe und der Position des Konzentratventils, um vorgegebene Kriterien für Permeatfluss und Permeatsalzgehalt zu erfüllen und den Energieverbrauch zu senken.

15. Computerprogramm, das Computerprogrammcode umfasst, der für die Ausführung in Verbindung mit einer Umkehrosmoseanlage konfiguriert ist, wobei die Umkehrosmoseanlage Folgendes umfasst:

eine Umkehrosmosestufe (100), die eine semipermeable Membran, einen Speiseeinlass (124), einen Permeatauslass (125) und einen Konzentratauslass (126) umfasst, wobei der Speiseeinlass konfiguriert ist, um Speisewasser aufzunehmen, das von einer Speisepumpe (102) angetrieben wird;

ein Konzentratventil (104), das so konfiguriert ist, dass es den Druck des Konzentratauslassstroms steuert;

eine Sensoranordnung (111, 112, 113) mit:

einem Speisedrucksensor;
einem Sensor für den Salzgehalt und/oder die Leitfähigkeit des Futters;
einem Speisetemperatursensor;
mindestens zwei Durchflusssensoren, die konfiguriert sind, um mindestens zwei von Folgendem zu messen:

Speisefluss, Permeatfluss und Konzentratfluss;
einem Sensor für den Salzgehalt und/oder die Leitfähigkeit des Permeats;
einem Differenzdrucksensor, der konfiguriert ist, um die Differenz zwischen dem Speisedruck und dem Konzentratdruck zu messen;
einem Permeatdrucksensor;
wobei der Computerprogrammcode konfiguriert ist, um Informationen von der Sensoranordnung zu empfangen und den Permeatfluss, den Permeatsalzgehalt und den Energieverbrauch zu bestimmen, und

um Steuerinformationen zu ermitteln, um die Geschwindigkeit der Speisepumpe und die Position des Konzentratventils zu steuern, um vorgegebene Permeatfluss- und Permeatsalzgehaltskriterien zu erfüllen und um den Energieverbrauch reduzieren.

## Revendications

1. Système d'osmose inverse (100), comprenant :

une étape d'osmose inverse (101) ayant une membrane semi-perméable, une entrée d'alimentation (124), une sortie de perméat (125) et une sortie de concentrat (126), dans lequel l'entrée d'alimentation est configurée pour recevoir de l'eau d'alimentation ayant un débit d'eau d'alimentation ;
une vanne de concentrat (104) configurée pour commander la pression de la sortie de concentrat ;
un réseau de capteurs (111, 112, 113) ayant :

un capteur de pression d'alimentation ;
au moins un parmi : un capteur de salinité d'alimentation et un capteur de conductivité ;
un capteur de température d'alimentation ;
au moins deux capteurs de débit configurés pour mesurer au moins deux parmi : un débit d'alimentation, un débit de perméat et un débit de concentrat ;
au moins un parmi : un capteur de salinité de perméat et un capteur de conductivité ;
un capteur de pression différentielle configuré pour mesurer la différence entre la pression d'alimentation et la pression de concentrat ; et
un capteur de pression de perméat ; et
un dispositif de commande (105) configuré pour recevoir des informations du réseau de capteurs et déterminer le débit de perméat, la salinité de perméat et la consommation d'énergie,
dans lequel le dispositif de commande est configuré pour permettre la commande du débit d'eau d'alimentation et de la position de la vanne de concentrat sur la base des informations reçues afin de répondre à des critères prédéterminés de débit de perméat et de salinité de perméat et de réduire la consommation d'énergie.

2. Système selon la revendication 1, dans lequel l'entrée d'alimentation est configurée pour recevoir de l'eau d'alimentation alimentée par une combinaison d'une pompe d'alimentation (102) et de l'énergie récupérée à partir du flux de sortie de concentrat via un dispositif de récupération d'énergie (103).

3. Système selon la revendication 2, dans lequel le système comprend une pompe de surpression (107) configurée pour fournir une pression supplémentaire à l'eau d'alimentation passant à travers le dispositif de récupération d'énergie, et dans lequel le dispositif de commande est configuré pour commander la pression et/ou le débit appliqué par la pompe de surpression.

4. Système selon l'une quelconque des revendications 2 à 3, dans lequel le dispositif de commande est configuré pour permettre la commande de la vitesse de la pompe d'alimentation (102) et de la position de la vanne de concentrat (104) sur la base des informations reçues et du comportement précédent du système afin de répondre à des critères prédéterminés de débit de perméat et de salinité de perméat et de réduire la consommation d'énergie.

5. Système selon l'une quelconque des revendications 2 à 4, dans lequel le dispositif de commande est configuré pour utiliser l'apprentissage automatique pour déterminer la vitesse de la pompe d'alimentation (102) et la position de la vanne de concentrat (104).

6. Système selon l'une quelconque des revendications 2 à 5, dans lequel le dispositif de commande est configuré pour déterminer le débit d'eau et le débit de sel à travers la membrane semi-perméable, et pour utiliser ces valeurs déterminées pour déterminer la vitesse de la pompe d'alimentation et la position de la vanne de concentrat.

7. Système selon l'une quelconque des revendications 2 à 6, dans lequel le dispositif de commande est configuré pour calculer des valeurs prévues pour le débit de perméat, la salinité de perméat et la consommation d'énergie pour des configurations particulières de la vitesse de la pompe d'alimentation et de la position de la vanne de concentrat sur la base des données du réseau de capteurs reçues précédemment.

8. Système selon la revendication 7, dans lequel le dispositif de commande est configuré pour :
commander la vitesse de la pompe d'alimentation (102) et la position de la vanne de concentrat (104) pour qu'elles soient à des valeurs correspondant à la consommation d'énergie minimale prévue pour répondre à des critères prédéterminés de débit de perméat et de salinité de perméat.

9. Système selon la revendication 7, dans lequel le dispositif de commande est configuré pour :

faire varier la vitesse de la pompe d'alimentation et la position de la vanne de concentrat autour de valeurs correspondant à la consommation d'énergie minimale pour répondre à des critères prédéterminés de débit de perméat et de salinité de perméat ;
affiner les valeurs prévues sur la base des écarts entre les valeurs prévues et les valeurs mesurées à partir du réseau de capteurs pour des configurations particulières de la vitesse de la pompe d'alimentation et de la position de la vanne de concentrat.

10. Système selon l'une quelconque des revendications 1 à 9, dans lequel le dispositif de commande est configuré pour commander la vitesse de la pompe d'alimentation et la position de la vanne de concentrat en temps réel pour répondre à des critères prédéterminés de débit de perméat et de salinité de perméat et pour réduire la consommation d'énergie.

11. Système selon l'une quelconque des revendications 1 à 10, dans lequel l'étape d'osmose inverse comprend de multiples sorties de perméat, et dans lequel le réseau de capteurs comprend un capteur de salinité de perméat respectif pour chaque sortie.

12. Système selon l'une quelconque des revendications 1 à 11, dans lequel les informations reçues comprennent des informations de temps.

13. Système selon l'une quelconque des revendications 1 à 12, dans lequel le réseau de capteurs comprend un capteur de température d'alimentation.

14. Procédé de commande d'un système d'osmose inverse, comprenant :

une étape d'osmose inverse (100) comprenant une membrane semi-perméable, une entrée d'alimentation (124), une sortie de perméat (125) et une sortie de concentrat (126), dans lequel l'entrée d'alimentation est configurée pour recevoir de l'eau d'alimentation alimentée par une pompe d'alimentation (102) ; une vanne de concentrat (104) configurée pour commander la pression du débit de sortie de concentrat ; le procédé comprenant :

la mesure d'une pression d'alimentation ; la mesure d'une salinité et/ou d'une conductivité d'alimentation ; la mesure d'une température d'alimentation ; la mesure d'au moins deux parmi : un débit d'alimentation, un débit de perméat et un débit de concentrat ;

la mesure d'une salinité et/ou d'une conductivité de perméat ;

la mesure d'une pression différentielle configurée pour mesurer la différence entre la pression d'alimentation et la pression de concentrat ;

la mesure d'une pression de perméat ;

la détermination du débit de perméat, de la salinité et/ou de la conductivité de perméat et de la consommation d'énergie sur la base des paramètres mesurés, et

le fait de permettre la commande de la vitesse de la pompe d'alimentation et de la position de la vanne de concentrat pour répondre à des critères prédéterminés de débit de perméat et de salinité de perméat et pour réduire la consommation d'énergie.

**15.** Programme informatique comprenant un code de programme informatique configuré pour fonctionner conjointement avec un système d'osmose inverse, le système d'osmose inverse comprenant :

une étape d'osmose inverse (100) comprenant une membrane semi-perméable, une entrée d'alimentation (124), une sortie de perméat (125) et une sortie de concentrat (126), dans lequel l'entrée d'alimentation est configurée pour recevoir de l'eau d'alimentation alimentée par une pompe d'alimentation (102) ;

une vanne de concentrat (104) configurée pour commander la pression du flux de sortie de concentrat ;

un réseau de capteurs (111, 112, 113) ayant :

un capteur de pression d'alimentation ;

un capteur de salinité et/ou de conductivité d'alimentation ;

un capteur de température d'alimentation ;

au moins deux capteurs de débit configurés pour mesurer au moins deux parmi : un débit d'alimentation, un débit de perméat et un débit de concentrat ;

un capteur de salinité et/ou de conductivité de perméat ;

un capteur de pression différentielle configuré pour mesurer la différence entre la pression d'alimentation et la pression de concentrat ;

un capteur de pression de perméat ;

dans lequel le code de programme informatique est configuré pour recevoir des informations du réseau de capteurs et déterminer le débit de perméat, la salinité de perméat et la consommation d'énergie, et pour déterminer des informations de commande pour commander la vitesse de la pompe d'alimentation et la position de la vanne de concentrat afin de répondre à des critères prédéterminés de débit de perméat et de salinité de perméat et de réduire la consommation d'énergie.

# Figure 1

# Figure 2

```
281 ──┐                    ┌──────────────────────┐
       └────────────────── │  Receive sensed       │ ◄──────────┐
                           │  parameters           │            │
                           │  from sensor array    │            │
                           └──────────────────────┘            │
                                      │                         │
287                                   ▼                         │
  \                        ┌──────────────────────┐            │
   \         282 ──┐       │ Determine the permeate│           │
    \              └────── │ flow, the permeate    │           │
  ┌──────────────┐         │ salinity and the      │           │
  │ Receive       │        │ energy use            │           │
  │ learning      │        └──────────────────────┘            │
  │ data          │                   │                         │
  └──────────────┘                    ▼                         │
         │                 ┌──────────────────────┐            │
         │                 │ Store system behaviour│           │
         │                 │ by associating feed   │           │
         └───────────────► │ pump speed,           │           │
                           │ concentrate valve     │           │
  283 ──────────────────── │ position and sensed   │           │
                           │ parameters with       │           │
                           │ determined permeate   │           │
                           │ flow, permeate salinity│          │
                           │ and energy use        │           │
                           └──────────────────────┘            │
                                      │                         │
  ┌──────────────┐                    ▼                         │
  │ Receive target│        ┌──────────────────────┐            │
  │ permeate flow,│        │ Determine feed pump   │           │
  │ the permeate  │        │ speed and concentrate │           │
  │ salinity      │        │ valve position that   │           │
  └──────────────┘  ─────► │ satisfies target      │           │
         │                 │ permeate flow and     │           │
  284                      │ permeate salinity     │           │
             285 ───────── │ while reducing energy │           │
                           │ consumption based on  │           │
                           │ previous system       │           │
                           │ behaviour             │           │
                           └──────────────────────┘            │
                                      │                         │
                                      ▼                         │
                           ┌──────────────────────┐            │
             286 ───────── │ Enable control of     │           │
                           │ system based on       │ ───────────┘
                           │ determined feed pump  │
                           │ speed and concentrate │
                           │ valve position        │
                           └──────────────────────┘
```

Figure 3

Cost Function

# Figure 4a

Energy Savings

## Figure 4b

Perm Flow, Before and After Optimization

## Figure 4c

Flow, Before and After Optimization

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011240234 A
- JP 2014161807 A
- US 9360848 B
- US 9821273 B
- WO 2012073693 A
- WO 2012111734 A
- US 2016229713 A1

**Non-patent literature cited in the description**

- **DOW FILMTEC.** Reverse Osmosis Manual